# EUROPÄISCHE PATENTSCHRIFT

(11) **EP 1 332 893 B1**
(45) Veröffentlichungstag und Bekanntmachung des Hinweises auf die Patenterteilung: **15.02.2006**
(21) Anmeldenummer: 02025962.8
(22) Anmeldetag: 21.11.2002
(51) Int. Cl.: B60C 9/20

(54) **Fahrzeugluftreifen**
Vehicle pneumatic tyre
Bandage pneumatique pour véhicule

(30) Priorität: 30.01.2002 DE 10203501
(43) Veröffentlichungstag der Anmeldung: 06.08.2003
(73) Patentinhaber: Continental Aktiengesellschaft, 30165 Hannover (DE)
(72) Erfinder: Lerner, Christian, Dr., 30169 Hannover (DE); Burfien, Jörg, 30823 Garbsen (DE)

(56) Entgegenhaltungen:
- EP-B- 0 325 552
- FR-A- 1 260 466
- US-A- 3 515 197

## Beschreibung

Die Erfindung betrifft einen Fahrzeugluftreifen in Radialbauart für Personenkraftwagen mit einem Laufstreifen, Wulstbereichen mit Wulstkernen, einer Radialkarkasse und einem Gürtel bestehend aus zwei Gürtellagen, deren jeweils in jeder Lage untereinander parallel verlaufende Stahlkorde mit der Umfangsrichtung einen Winkel von 15 bis 25° einschließen und derart angeordnet sind, dass die Stahlkorde in der einen Lage die Stahlkorde in der zweiten Lage kreuzen, wobei die erste, radial weiter außen verlaufende Gürtellage schmäler ausgeführt ist als die zweite Gürtellage und die Stahlkorde der beiden Gürtellagen dem Betrag nach unterschiedliche Winkel mit der Reifenumfangsrichtung einschließen.

Ein derartiger Fahrzeugluftreifen ist aus der EP-B-0 325 552 bekannt. Die erste, oberhalb der zweiten Gürtellage angeordnete Gürtellage, welche die schmälere der beiden Lagen ist, weist Stahlkorde auf, deren Winkel zur Umfangsrichtung größer gewählt wird als der Winkel, den die Stahlkorde der zweiten Gürtellage mit der Umfangsrichtung einschließen. Die Winkeldifferenz kann zwischen 1 und 4° betragen. Diese Maßnahme soll eine Verbesserung der Fahreigenschaften des Reifens bewirken, verstärkt jedoch den bereits bei einer symmetrischen, unter übereinstimmenden Winkeln erfolgenden Anordnung der Stahlkorde während des Abrollens auftretenden Querkraftaufbau. Sowohl bei einer herkömmlichen Ausführung der Gürtellagen als auch bei jener gemäß der EP-B-0 325 552, hier, wie erwähnt, in einem noch größeren Ausmaß, verursacht die untere, zweite Gürtellage bei der Abplattung und Stauchung des Reifens, wie sie beim Latscheinlauf und nachfolgend auch beim Latschauslauf auftreten, Querverformungen, die größer sind als jene der oberen Gürtellage, sodass die Querverformungen der unteren Gürtellage überwiegen. Bei einem Schräglaufwinkel von 0° führt dies in Summe zu einem Querkraftaufbau, sodass derart aufgebaute Reifen, um die Querkraft Null zu erreichen, unter einem gewissen Schräglaufwinkel am Fahrzeug angeordnet werden müssen. Die ungleichen Querverformungen bzw. die daraus resultierenden Kräfte beeinträchtigen die Hochgeschwindigkeitshaltbarkeit und das Handlingverhalten des Reifens.

Der Erfindung liegt die Aufgabe zu Grunde, bei einem Reifen der eingangs genannten Art den Gürtel auf einfache Weise derart auszuführen, dass die Querkraftdifferenz deutlich verringert bzw. zum Verschwinden gebracht werden kann, um die Hochgeschwindigkeitshaltbarkeit und das Handling des Reifens zu verbessern.

Gelöst wird die gestellte Aufgabe durch die Merkmale des Anspruchs 1.

Gemäß der Erfindung wird somit das Verformungsverhalten des Gürtels durch eine "effektive Symmetrie" der Gürtellagen positiv beeinflusst. Die Querverformungen, die beide Gürtellagen durch die Wölbungsveränderung und Stauchung während des Abrollens des Reifens bewirken, können sich auf diese Weise zumindest im Wesentlichen kompensieren, sodass beim erwünschten Schräglaufwinkel von 0° auch die resultierende Querkraft Null bzw. nahezu Null und somit vemachlässigbar ist. Wie Tests mit erfindungsgemäß ausgeführten Reifen gezeigt haben, lassen sich auf diese Weise die Hochgeschwindigkeitshaltbarkeit und das Handling eines Reifens deutlich verbessern.

Die Erfindung wird nun anhand der Zeichnung, die schematische Darstellungen enthält, näher beschrieben. Dabei zeigen,
Fig. 1 einen radialen Teilschnitt durch einen Fahrzeugluftreifen,
Fig. 2 eine Draufsicht auf einen Umfangsabschnitt des Gürtels des Reifens gemäß Fig. 1 und
Fig. 3 eine zu Fig. 2 analoge Ansicht, jedoch auf einen Gürtel in herkömmlicher Ausführung.

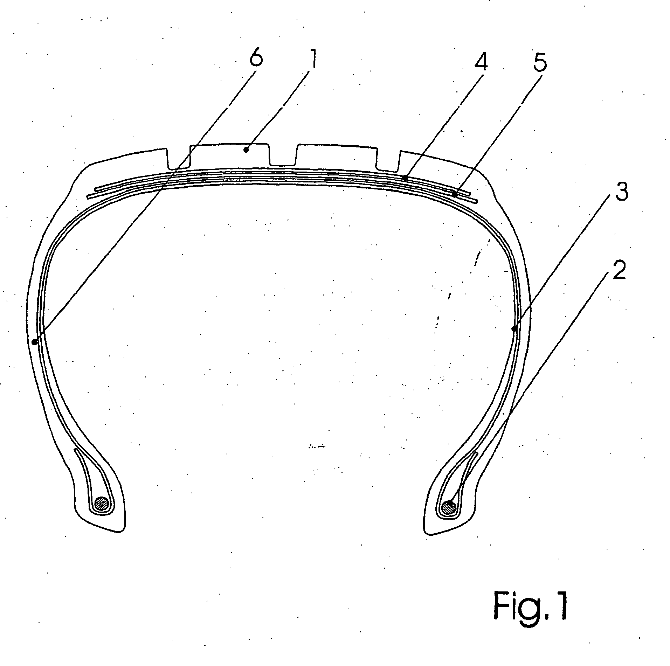

Der in Fig. 1 schematisch gezeigt Reifen ist ein PKW-Radialreifen, welcher die üblichen Reifenbauteile, wie einen profilierten Laufstreifen 1, Seitenwände 6, Wulstbereiche mit Wulstkernen 2, eine Radialkarkasse 3 und zwei Gürtellagen 4, 5 aufweist, die zwischen dem Laufstreifen 1 und der Radialkarkasse 3 angeordnet sind. Die erste, radial weiter außen verlaufende Gürtellage 4 ist etwas schmäler ausgeführt als die zweite, radial weiter innen verlaufende Gürtellage 5. Beide Gürtellagen 4, 5 bestehen aus in eine Gummimischung eingebetteten und in jeder Lage jeweils zueinander parallel verlaufenden Stahlkorden. Die Fadendichte, die Anzahl der Stahlkorde pro Längeneinheit und normal zur Erstreckungsrichtung der Stahlkorde gemessen, ist in beiden Gürtellagen 4, 5 übereinstimmend gewählt. Die Stahlkorde der einen Gürtellage 4 kreuzen sich mit den Stahlkorden der anderen Gürtellage 5.

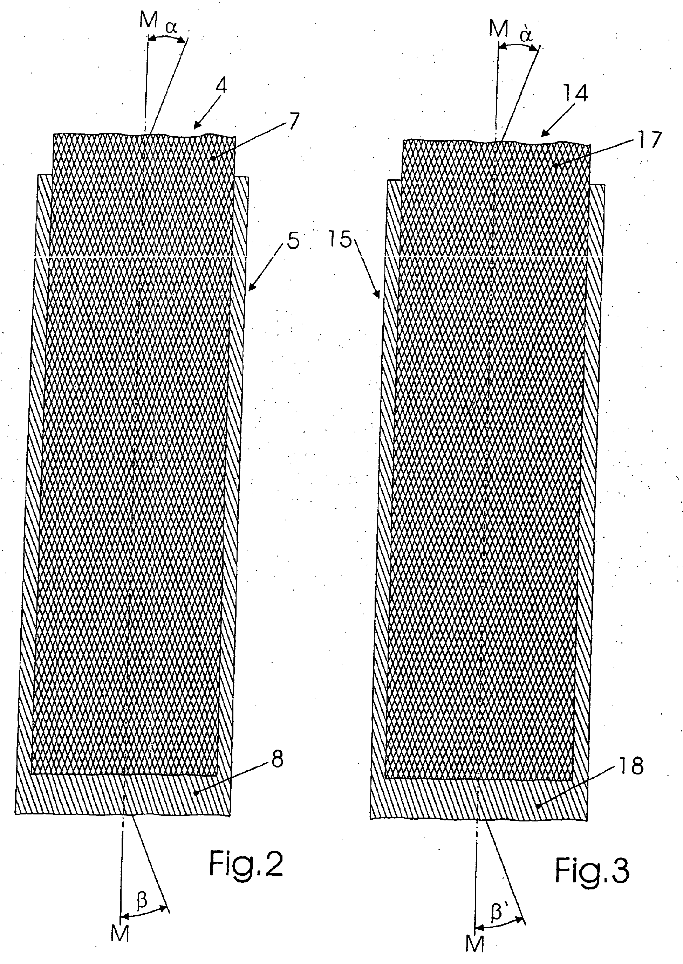

Bevor auf die erfindungsgemäße gegenseitige Anordnung der Stahlkorde in den beiden Gürtellagen 4, 5 eingegangen wird, wird vorerst anhand der Fig. 3 die Anordnung bzw. der Verlauf der Stahlkorde in Gürtellagen 14, 15 eines herkömmlichen Gürtels erläutert.

Wie Fig. 3 zeigt ist der Winkel α', den die Stahlkorde 17 der oberen, schmäleren Gürtellage 14 mit der Umfangsrichtung M-M des Reifens einschließen, gleich groß zum Winkel β', unter welchem die Stahlkorde 18 der Gürtellage 15 verlaufen, wobei die Stahlkorde 18 der Gürtellage 14 die Stahlkorde 17 der Gürtellage 15 kreuzen. Somit sind die Stahlkorde 18 in der breiteren Gürtellage 15 deutlich länger als die Stahlkorde 17, die innerhalb der Gürtellage 14 verlaufen. Für jeweils einen der Stahlkorde 17, 18 aus jeder Gürtellage 14, 15 ist dies in Fig. 3 durch eine besondere Strichdicke verdeutlicht. Ein herkömmlich aufgebauter zweilagiger Gürtel ist somit, trotz symmetrischer Anordnung der Gürtellagen 14, 15, bezüglich der Mittelumfangslinie des Gürtels M-M asymmetrisch. Wie Fig. 1 zeigt sind die Gürtellagen innerhalb des Reifens leicht gewölbt, sodass beim Abrollen des am Fahrzeug montierten Reifens unter Last eine Abplattung bzw. Stauchung des Laufstreifens, der Gürtellagen und der Karkasse im Aufstandsbereich, im Latsch, erfolgt. In Folge der erwähnten Asymmetrie bewirkt die zweite, weiter innen befindliche Gürtellage während der Abplattung bzw. Stauchung des Reifens, wie sie beim Latscheinlauf und nachfolgend auch beim Latschauslauf auftritt, in einem etwas höheren Maß Querverformungen, als die radial weiter außen befindliche Gürtellage. Die Differenz dieser beiden Querverformungen führt zu einem gewissen Querkraftaufbau. Bei Fahrzeugen, wo derart aufgebaute PKW-Reifen eingesetzt werden, muss daher ein kleiner Schräglaufwinkel eingestellt werden, um die Querkraft zu kompensieren bzw. zu eliminieren. Trotzdem hat dieser "asymmetrische" Aufbau für die Hochgeschwindigkeits-Dauerhaltbarkeit eines Reifens und seine Handlingseigenschaften Nachteile.

Fig. 2 zeigt einen erfindungsgemäß ausgeführten zweilagigen Gürtel, bei dem durch die gegenseitige Anordnung der Stahlkorde 7, 8, durch deren Winkelung bzw. Schrägstellung zueinander, keine bzw. so gut wie keine Querkraftdifferenz entsteht. Bei einem Schräglaufwinkel von 0° wird vom Gürtel somit auch keine bzw. nur eine sehr geringe Querkraft aufgebaut. Der derart "effektiv - symmetrische" Reifen weist im Kreuzverband angeordnete Stahlkorde 7, 8 in den Gürtellagen 4, 5 auf, deren Stahlkorde 7, 8 trotz unterschiedlicher Breiten der Gürtellagen 4, 5 zumindest im Wesentlichen gleich lang sind. Dies.:wird dadurch erreicht, dass die Stahlkorde 7 in der schmäleren, ersten Gürtellage 4 mit der Umfangsrichtung einen Winkel α einschließen, der kleiner ist als der Winkel β, welchen die Stahlkorde 8 in der zweiten Gürtellage 5 mit der Umfangsrichtung einschließen.

Bei einer für PKW-Reifen üblichen Breite für die Gürtellagen 4, 5, bei einer üblichen Größe für den Winkel β von 15 - 25° und einem Breitenunterschied der ersten Gürtellage 4 relativ zur zweiten Gürtellage 5 in der Größenordnung von insgesamt ca. 20 mm, beträgt die Differenz der Winkel α und β in der Größenordnung von 1 bis 3 Grad. Die Winkeldifferenz hängt somit von der tatsächlichen Breite der beiden Gürtellagen 4, 5, der Breitendifferenz der beiden Gürtellagen 4, 5 und der Größe des Winkels β ab. Durch die Erfindung wird eine sehr einfach zu realisierende Maßnahme aufgezeigt, den Reifen derart auszulegen, dass bei einem Schräglaufwinkel von 0° auch die Querkraft Null ist, sprich keine Querkraft aufgebaut wird.

## Patentansprüche

1. Fahrzeugluftreifen in Radialbauart für Personenkraftwagen mit einem Laufstreifen (1), Wulstbereichen mit Wulstkemen (2), einer Radialkarkasse (3) und einem Gürtel bestehend aus zwei Gürtellagen (4, 5), deren jeweils in jeder Lage (4, 5) untereinander parallel verlaufende Stahlkorde (7, 8) mit der Umfangsrichtung einen Winkel (α, β) von 15 bis 25° einschließen und derart angeordnet sind, dass die Stahlkorde (7) in der einen Lage (4) die Stahlkorde (8) in der zweiten Lage (5) kreuzen, wobei die erste, radial weiter außen verlaufende Gürtellage (4) schmäler ausgeführt ist als die zweite Gürtellage (5) und die Stahlkorde (7, 8) der beiden Gürtellagen (4, 5) dem Betrag nach unterschiedliche Winkel mit der Reifenumfangsrichtung einschließen,
**dadurch gekennzeichnet,**
**dass** die Stahlkorde (7) in der ersten Gürtellage (4) unter einem kleineren Winkel (α) zur Reifenumfangsrichtung verlaufend angeordnet sind als die Stahlkorde (8) in der zweiten Gürtellage (5), derart, dass die Länge der Stahlkorde (7) in der ersten Gürtellage (4) mit der Länge der Stahlkorde (8) in der zweiten Gürtellage (5) übereinstimmt.

2. Fahrzeügtuftreifen nach Anspruch 1, **dadurch gekennzeichnet, dass** der Winkel (β), den die Stahlkorde (8) in der zweiten, breiteren Gürtellage (5) mit der Umfangsrichtung einschließen, 18 bis 23° beträgt.

## Claims

1. Pneumatic vehicle tyre of a radial type, in particular for passenger cars, with a tread rubber (1), bead regions with bead cores (2), a radial casing (3) and a breaker belt, comprising two belt plies (4, 5), the steel cords (7, 8) of which, respectively running parallel to one another in each ply (4, 5), form an angle (α, β) with the circumferential direction of 15 to 25° and are arranged in such a way that the steel cords (7) in the one ply (4) cross the steel cords (8) in the second ply (5), the first belt ply (4), running further outwards radially, being made narrower than the second belt ply (5), and the steel cords (7, 8) of the two belt plies (4, 5) forming angles of different amounts with the circumferential direction of the tyre, **characterized in that** the steel cords (7) in the first belt ply (4) are arranged such that they run at a smaller angle (α) in relation to the circumferential direction of the tyre than the steel cords (8) in the second belt ply (5) in such a way that the length of the steel cords (7) in the first belt ply (4) coincides with the length of the steel cords (8) in the second belt ply (5).

2. Pneumatic vehicle tyre according to Claim 1, **characterized in that** the angle (β) which the steel cords (8) in the second, wider belt ply (5) form with the circumferential direction is 18 to 23°.

## Revendications

1. Bandage pneumatique pour voiture, du type radial, qui présente une bande de roulement (1), des zones de bourrelet dotées d'une âme (2) de bourrelet, d'une carcasse radiale (3) et d'une ceinture constituée de deux couches de ceinture (4, 5) dont les cordons d'acier (7, 8) qui s'étendent parallèlement les uns aux autres dans chaque couche (4, 5) forment avec la direction de la périphérie un angle (α, β) de 15 à 25° et sont disposés de telle sorte que les cordons d'acier (7) d'une couche (4) croisent les cordons d'acier (8) de la deuxième couche (5), la première couche de ceinture (4) qui s'étend radialement plus loin vers l'extérieur étant plus étroite que la deuxième couche de ceinture (5), les cordons d'acier (7, 8) des deux couches de ceinture (4, 5) formant des angles différents avec la périphérie du bandage en fonction de leur valeur,
**caractérisé en ce que** les cordons d'acier (7) de la première couche de ceinture (4) sont disposés de manière à s'étendre vers la périphérie du bandage sous un angle (α) plus petit que celui des cordons d'acier (8) de la deuxième couche de ceinture (5), de telle sorte que la longueur des cordons d'acier (7) de la première couche de ceinture (4) corresponde à la longueur des cordons d'acier (8) de la deuxième couche de ceinture (5).

2. Bandage pneumatique pour véhicule selon la revendication 1, **caractérisé en ce que** l'angle (β) que les cordons d'acier (8) dans la deuxième couche de ceinture (5) plus large forment avec la périphérie est compris entre 18 et 23°.
